# EUROPÄISCHE PATENTSCHRIFT

(11) **EP 2 863 551 B1**
(45) Veröffentlichungstag und Bekanntmachung des Hinweises auf die Patenterteilung: **16.08.2017**
(21) Anmeldenummer: 14188507.9
(22) Anmeldetag: 10.10.2014
(51) Int. Cl.: H04B 3/46, H02J 13/00, H04B 3/54

(54) **Verfahren und System zum Bestimmen eines Betriebszustands einer Netzkomponente in einem Stromversorgungsnetzwerk**
Method and system for determining an operating status of a network component in a power supply network
Méthode et système pour la détermination de l'état opérationnel d'un composant réseau dans un réseau de distribution d'énergie

(30) Priorität: 15.10.2013 DE 102013220902; 07.10.2014 DE 102014220323
(43) Veröffentlichungstag der Anmeldung: 22.04.2015
(73) Patentinhaber: Power Plus Communications AG, 68167 Mannheim (DE)
(72) Erfinder: Mayer, Eugen, 68305 Mannheim (DE); Rindchen, Markus, 67574 Osthofen (DE)
(74) Vertreter: Patent- und Rechtsanwälte Ullrich & Naumann

(56) Entgegenhaltungen:
- EP-A2- 2 348 608
- WO-A2-2011/035301

## Beschreibung

Die Erfindung betrifft ein Verfahren und ein System zum Bestimmen eines Betriebszustands einer Netzkomponente in einem Stromversorgungsnetzwerk unter Verwendung eines Powerline Communication-Systems.

In vielen Industrieländern ist elektrische Energie bis Anfang der 1990er Jahre im Wesentlichen aus zentralen Kraftwerken, wie Kern-, Kohle-, Öl- und Gaskraftwerke, in das Stromversorgungsnetzwerk eingespeist worden. Kleinere dezentrale Erzeuger, wie Wasserkraftwerke, Wind- oder Photovoltaik-Anlagen, haben oft eine eher untergeordnete Rolle gespielt und waren sehr häufig unter der Kontrolle von großen Energieversorgungsunternehmen. Damit war die Energieerzeugung sehr gut steuerbar. Zur Gewährleistung einer hinreichenden und stabilen Energieversorgung sämtlicher zu versorgenden elektrischer Verbraucher wurde die Energieerzeugung anhand eines Standardlastverlaufs geplant. Der Standardlastverlauf beschreibt den regelmäßig über einen Tag hinweg zu erwartenden elektrischen Energieverbrauch, unterteilt in Grundlast, Mittellast und Spitzenlast und unter Berücksichtigung des jeweiligen Wochentags und der Jahreszeit.

In den vergangenen Jahren sind weltweit große Bemühungen unternommen worden, vermehrt elektrische Energie aus regenerativen Energiequellen zu erzeugen. Zu nennen sind hierbei insbesondere Wasserkraft-, Windkraft-, Photovoltaik- oder Biogas-Anlangen. Während beispielsweise in Deutschland 1990 lediglich ca. 3,4 % des Stromverbrauchs aus regenerativen Energien gedeckt wurde, ist dieser Anteil 2013 bereits auf 24,7 % angestiegen. Politische Bestrebungen gehen zu noch deutlich höheren Anteilen. Dadurch entstand und entsteht eine Vielzahl von dezentralen Erzeugern auf Nieder- oder auch Mittelspannungsebene, die einen immer größer werdenden Anteil der bereitgestellten elektrischen Energie erzeugen und deren eingespeiste Energie von der aktuellen Wetterlage abhängt. Da bei den zentralen Kraftwerken aber weiterhin eine Planung der Energieerzeugung notwendig ist, wird die bisherige Planung über Standardlastverlauf durch aktuelle Wetterdaten und -vorhersagen ergänzt. Dadurch wird die Abschätzung der voraussichtlich durch zentrale Kraftwerke bereitzustellenden Energiemenge verbessert.

Problematisch daran ist, dass die meisten dezentralen Erzeuger nicht unter der Kontrolle der Betreiber der zentralen Kraftwerke sind. Dadurch haben die Betreiber üblicherweise keine Informationen darüber, ob bei einem dezentralen Erzeuger ein fehlerfreier Betrieb möglich ist und damit auch tatsächlich die abgeschätzte Energiemenge eingespeist werden kann. Ein jederzeit fehlerfreier Betrieb sämtlicher dezentraler Erzeuger ist sicher praxisfern. Es können verschiedenste Fehler auftreten, die eine Einspeisung von elektrischer Energie in das Stromversorgungsnetzwerk durch einen dezentralen Erzeuger verhindern können. Dies kann für die Stabilität des gesamten Stromversorgungsnetzwerks problematisch werden.

Es wäre denkbar, bei der Planung der Energieerzeugung statistische Werte einzurechnen, die die Wahrscheinlichkeit eines fehlerfreien Betriebs einer Anlage wiedergeben. Allerdings sind derartige Modelle komplex und bilden die Realität nur ungenügend ab. Ferner sind statistische Modelle ungenau und können dennoch zu einer Mehr- oder Minderproduktion führen. Daher ist es erstrebenswert, Diagnosemittel zur Bestimmung des Betriebszustands von dezentralen Erzeuger zu haben. Durch Kenntnis des Betriebszustands eines Erzeugers ließen sich die Betriebssicherheit und Stabilität des Versorgungsnetzes und die Planbarkeit der Energieerzeugung deutlich verbessern. Dies kann auch für Großverbraucher sinnvoll sein, denn der plötzliche Ausfall einer großen Last kann zu Problemen und Instabilitäten im Stromversorgungsnetzwerk führen.

Aus der EP 2 348 608 A2 sind ein Verfahren und ein System bekannt, mit dem elektrische Geräte an einer Elektroverkabelung innerhalb eines Gebäudes identifiziert werden können. Hierzu wird die Rückwirkung des elektrischen Gerätes, insbesondere hinsichtlich der Amplitude, der Phasenlage und der zeitlichen Lage, durch einen oder mehrere Sensoren gemessen und ausgewertet. Die Rückwirkung wird mit Kandidaten für elektrische Charakteristika verglichen und daraus auf eine Aktivität des elektrischen Geräts geschlossen. Gemäß einem Ausführungsbeispiel soll der Sensor durch ein PLC-Modem gebildet sein.

Der vorliegenden Erfindung liegt die Aufgabe zugrunde, ein Verfahren und ein System bereitzustellen, das die Bestimmung des Betriebszustands von Netzkomponenten in einem Stromversorgungsnetzwerk auf einfache und kostengünstige Art und Weise ermöglicht.

Erfindungsgemäß wird die voranstehende Aufgabe durch die Merkmale des Anspruchs 1 gelöst. Danach nutzt das in Rede stehende Verfahren eine Vielzahl von PLC-Knoten des PLC-Systems, die über ein geographisches Gebiet verteilt sind, und umfasst die Schritte:
Empfangen eines PLC-Signals durch einen Powerline Communication-Knoten - PLC-Knoten - des PLC-Systems, wobei der PLC-Knoten mit dem Stromversorgungsnetzwerk verbunden ist,
Extrahieren eines Signalanteils aus dem PLC-Signal, der durch Rückwirkung der Netzkomponente auf das Stromversorgungsnetzwerk entstanden und in das PLC-Signal eingekoppelt ist,
Vergleichen des Signalanteils mit mindestens einer von mehreren Referenzcharakteristiken, wobei eine Referenzcharakteristik ein Verhalten der Netzkomponente bei bekanntem Betriebszustand beschreibt und wobei mindestens einer der Betriebszustände, die durch eine Referenzcharakteristik beschreibbar ist, ein Fehlerbetrieb ist,
Identifizieren einer Referenzcharakteristik, die dem extrahierten Signalanteil oder einer aus dem Signalteil gebildeten Charakteristik möglichst ähnlich ist, und
Bestimmen des Betriebszustands der Netzkomponente basierend auf der identifizierten Referenzcharakteristik.

Hinsichtlich des Systems ist die voranstehende Aufgabe durch die Merkmale des Anspruchs 14 gelöst. Danach umfasst das System:
eine Vielzahl von PLC-Knoten, die über ein geographisches Gebiet verteilt und Bestandteil des PLC-Systems sind und die jeweils zum Empfangen eines PLC-Signals aus dem Stromversorgungsnetzwerk ausgebildet ist,
Mittel zum Extrahieren eines Signalanteils aus dem empfangenen PLC-Signal, der durch Rückwirkung der Netzkomponente auf das Stromversorgungsnetzwerk entstanden und in das PLC-Signal eingekoppelt ist,
Mittel zum Bereitstellen von Referenzcharakteristiken, wobei eine Referenzcharakteristik ein Verhalten der Netzkomponente bei bekanntem Betriebszustand beschreibt,
Mittel zum Vergleichen des Signalanteils mit mindestens einer der Referenzcharakteristik,
Mittel zum Identifizieren einer Referenzcharakteristik, die dem extrahierten Signalanteil oder einer aus dem Signalteil gebildeten Charakteristik möglichst ähnlich ist, und
Mittel zum Bestimmen des Betriebszustands basierend auf der identifizierten Referenzcharakteristik, wobei mindestens einer der Betriebszustände, die durch eine Referenzcharakteristik beschreibbar ist, ein Fehlerbetrieb ist.

In erfindungsgemäßer Weise ist zunächst erkannt worden, dass jede Netzkomponente, die Energie aus einem Stromversorgungsnetzwerk bezieht oder Energie in ein Stromversorgungsnetzwerk einspeist, eine charakteristische Rückwirkung auf das Stromversorgungsnetzwerk hat. Selbst Komponenten, die Energie innerhalb des Versorgungsnetzwerks weiterleiten, können eine charakteristische Rückwirkung auf das Netzwerk haben. Erfindungsgemäß ist ferner erkannt worden, dass diese charakteristische Rückwirkung von dem jeweiligen Betriebszustand der Netzkomponente abhängig ist. Auf diese Weise kann aus einer identifizierten Rückwirkung ein Rückschluss auf den Betriebszustand der Netzkomponente gezogen werden. Es ist ferner erkannt worden, dass sehr viele dieser Rückwirkungen auch in einem PLC (Powerline Communication)-Signal eines PLC-Systems detektierbar sind, wodurch sich ein Zusatznutzen des PLC-Systems für das Bestimmen eines Betriebszustands ergibt. Da bestehende PLC-Knoten verwendet oder relativ einfach nachgerüstet werden können, wird ein erheblicher Beitrag dazu geleistet, ein kostengünstiges System zum Bestimmen des Betriebszustands einer Netzkomponente zu relativ geringen Kosten bereitzustellen.

Die charakteristische Rückwirkung einer Netzkomponente ergibt sich im Wesentlichen aus der Verschaltung und Ansteuerung der einzelnen Bauelemente, aus der die Netzkomponente zusammengesetzt ist. Insbesondere aktive Bauelemente, wie Transistoren, IGBTs (Insulated-Gate Bipolar Transistor), Thyristoren, Triacs oder andere steuerbare Halbleiterelemente, rufen hierbei besonders gut nutzbare Signalanteile hervor. Wechselrichtersysteme, die beispielsweise eine Gleichspannung aus einem Photovoltaik-Modul zum Einspeisen in das Stromversorgungsnetzwerk in eine Wechselspannung umwandeln, koppeln Signalanteile in das Stromversorgungsnetzwerk ein, die einen charakteristischen Zeit- und Frequenzverlauf haben. Diese sind abhängig von dem Aufbau der Wechselrichterbrücke des Wechselrichters, den in der Wechselrichterbrücke verwendeten Halbleiterelementen, dem verwendeten PWM-Signal (Pulsweiten-moduliertes Signal) zur Ansteuerung der Wechselrichterbrücke, der Beschaltung der Bauelemente, der an dem Wechselrichter anliegenden Eingangsspannung und vielen weiteren Einflüssen. Diese beispielhafte Aufzählung gilt für viele andere Netzkomponenten entsprechend, wie ein Fachmann erkennen wird. Dadurch entsteht abhängig vom Aufbau der Netzkomponente eine charakteristische Rückwirkung auf das Stromversorgungsnetzwerk, die wie eine Art "elektrischer Fingerabdruck" der Netzkomponente im Stromversorgungsnetzwerk wirkt. Die Rückwirkung ist zwar zusätzlich abhängig von den Toleranzen der einzelnen Bauelemente der Netzkomponente, dennoch bleibt ein bauartabhängiges Charakteristikum erhalten. Zudem ist die Rückwirkung abhängig von dem Betriebszustand der Netzkomponente. Ein fehlerfrei arbeitender Wechselrichter wird eine andere Rückwirkung auf das Stromversorgungsnetzwerk haben als beispielsweise ein Wechselrichter, bei dem ein Halbleiterelement in der Wechselrichterbrücke ausgefallen ist.

Eine Detektierbarkeit dieser Rückwirkungen durch einen PLC-Knoten ergibt sich dadurch, dass PLC-Systeme ein vorhandenes Stromversorgungsnetzwerk zur Übertragung von Daten mittels PLC-Signalen nutzt. Dadurch dient das Stromversorgungsnetzwerk zum einen zum Übertragen elektrischer Energie und zum anderen zum Übertragen von Daten. Zur Kommunikation im PLC-System werden die zu übertragenden Daten auf eine Vielzahl von Subkanälen moduliert, die - beispielsweise bei Breitband-Powerline (BPL) - üblicherweise in einem Frequenzbereich zwischen etwas 1 und 30 MHz ausgebildet sind. Bei einem PLC-Knoten werden nicht nur die an ihn gerichteten PLC-Signale empfangen. Vielmehr sind die PLC-Signale mit einer Reihe von weiteren Signalanteilen überlagert, die in das PLC-Signal während der Übertragung vom Sende- zum Empfangsknoten eingekoppelt wurden. Teile dieser Signalanteile resultieren von Netzkomponenten bzw. deren Rückwirkungen auf das Stromversorgungsnetzwerk. Diese Signalanteile werden üblicherweise am PLC-Knoten durch geeignete Maßnahmen eliminiert. Durch Auswertung der Signalanteile kann jedoch der erfindungsgemäße Zusatznutzen des PLC-Systems realisiert werden.

Zur Bestimmung des Betriebszustands einer Netzkomponente wird erfindungsgemäß in einem ersten Schritt ein PLC-Signal von einem PLC-Knoten empfangen. Ein PLC-Knoten ist im weitesten Sinne zu verstehen und kann prinzipiell durch jedes Gerät gebildet sein, das zum Empfang und Verarbeiten von PLC-Signalen ausgestaltet und mit dem Stromversorgungsnetzwerk verbunden ist. Dies kann beispielsweise ein PLC-Repeater oder ein PLC-Gateway sein. Vorzugsweise ist der PLC-Knoten jedoch durch ein PLC-Modem gebildet, mit dem ein Rechner, ein Server, ein Router oder dergleichen verbunden ist. In dem Stromversorgungsnetzwerk ist üblicherweise eine Vielzahl derartiger PLC-Knoten vorhanden, wodurch eine relativ hohe Dichte von "Messstationen" entsteht. Denkbar wäre beispielsweise, eine Auswertung in einem PLC-Modem zu implementieren, das bei einem PLC-Endkunden installiert ist. Denkbar wäre auch, entsprechende PLC-Modems in Trafostationen oder anderen für den Betrieb des Stromversorgungsnetzwerks relevanten Punkten zu installieren.

Nach Empfang des PLC-Signals wird aus dem PLC-Signal ein Signalanteil extrahiert, der durch Rückwirkung der Netzkomponente auf das Stromversorgungsnetzwerk entstanden ist und in das PLC-Signal während der Übertragung eingekoppelt wurde. Diese extrahierten Signalanteile werden in einem weiteren Schritt mit mindestens einer von mehreren Referenzcharakteristiken verglichen, wobei eine Referenzcharakteristik eine typische Rückwirkung einer Netzkomponente auf ein Stromversorgungsnetzwerk bei einem bekannten Betriebszustand beschreibt. Da durch die bereitgestellten Referenzcharakteristiken definiert ist, welche Netzkomponenten und deren Betriebszustände detektiert werden können, kann auch eine Aussage darüber gemacht werden, welche Zeit- und/oder Frequenzverläufe möglicherweise relevant sein können. Diese Informationen kann beim Extrahieren der Signalanteile genutzt werden. So kann beispielsweise ein definierter Frequenzbereich des PLC-Signals betrachtet werden, der für die möglichen Netzkomponenten in Frage kommt. Die Extraktion kann dann beispielsweise durch ein Bandpassfilter realisiert sein.

Bei dem Vergleich der aus einem empfangenen PLC-Signal extrahierten Signalanteile mit der Referenzcharakteristik wird der extrahierte Signalanteil vorzugsweise mit einer Vielzahl von Referenzcharakteristiken verglichen oder die Ähnlichkeit des Signalanteils mit der Referenzcharakteristik beurteilt. Es erfolgt jedoch ein Vergleich mit mindestens einer Referenzcharakteristik. Der Vergleich kann beispielsweise durch Korrelation des Signalanteils mit der Referenzcharakteristik erfolgen. Je größer die Ähnlichkeit zwischen einem extrahierten Signalanteil und einer Referenzcharakteristik ist, desto wahrscheinlicher ist der extrahierte Signalanteil durch eine Netzkomponente und einen Betriebszustand der Netzkomponente hervorgerufen, die durch die betreffende Referenzcharakteristik repräsentiert werden. Vor Durchführung des Vergleichs kann eine Normierung oder anderweitige Aufbereitung des extrahierten Signalanteils erforderlich sein, um eine Vergleichbarkeit zu erzielen.

Die Referenzcharakteristik kann einen konkreten Signalverlauf, konkrete Frequenzanteile und/oder bestimmte Amplituden wiedergeben. Allerdings kann die Referenzcharakteristik auch eine Abstraktion der Rückwirkung einer Netzkomponente sein. So könnte für das Bestimmen der Referenzcharakteristik ein Kennwert aus einem Signalverlauf am Anschluss der Netzkomponente ermittelt werden. In diesem Fall würde die Referenzcharakteristik durch ein oder mehrere Kennwerte definiert. Wenn die Referenzcharakteristik durch einen Kennwert repräsentiert ist, müsste aus dem Signalanteil ebenso ein Kennwert extrahiert und dieser mit dem Kennwert der Referenzcharakteristik verglichen werden.

Basierend auf dem Ergebnis des Vergleichs wird diejenige Referenzcharakteristik identifiziert, die mit dem Signalanteil oder mit der in dem Signalanteil beinhalteten Charakteristik die größte Übereinstimmung aufweist. Da die identifizierte Referenzcharakteristik repräsentativ für den sehr wahrscheinlich vorliegenden Betriebszustand einer Netzkomponente ist, kann damit der Betriebszustand der Netzkomponente bestimmt oder zumindest abgeschätzt werden.

Die beanspruchte Lehre bietet einen Zusatznutzen für den Einsatz eines PLC-Systems, das neben der Kommunikationsfunktionalität die Bestimmung des Betriebszustands von mit dem Stromversorgungsnetzwerk verbundenen Netzkomponenten ermöglicht. Dabei ist zur Bestimmung des Betriebszustands kein direkter Zugriff auf die Netzkomponenten oder deren Bauteile notwendig. Zudem ist zum Ermöglichen der Bestimmung keine Modifikation der vorhandenen Netzkomponenten notwendig. Dadurch müssen ältere Netzkomponenten nicht kostspielig nachgerüstet werden.

Vorzugsweise wird das Extrahieren des Signalanteils aus dem empfangenen PLC-Signal unter Verwendung eines Kanalmodells durchgeführt. Das Kanalmodell beschreibt einen Übertragungskanal, der auf einer Übertragungsstrecke zwischen einem sendenden PLC-Knoten und dem empfangenden PLC-Knoten in dem Stromversorgungsnetzwerk ausgebildet ist und zur Übertragung von PLC-Signalen genutzt wird. Durch das Kanalmodell wird die Beeinflussung eines Signals auf der Übertragungsstrecke berechenbar. Da ein Kanalmodell in den meisten Fällen eine Annäherung des real vorhandenen Verhaltens des Übertragungskanals ist, sind die berechneten Beeinflussungen eines Signals durch den Übertragungskanal lediglich eine Abschätzung der realen Gegebenheiten. Sehr häufig sind die Abschätzungen aber hinreichend genau, um Aussagen über die Beeinflussung eines in den Übertragungskanal eingekoppelter Signalanteils durch den Übertragungskanal machen zu können.

Zusätzlich oder alternativ zur Verwendung des Kanalmodells können zum Extrahieren des Signalanteils in das PLC-Signal eingekoppelte Störsignale genutzt werden. Die Störsignale werden auf der Übertragungsstrecke des PLC-Signals in den Übertragungskanal eingestreut, wodurch diese in das PLC-Signal einkoppeln. Üblicherweise liegen additive Störsignale vor, die sich somit zu dem PLC-Signal addieren. Am empfangenden PLC-Knoten würde das PLC-Signal daher mit überlagerten Störsignalen eingehen. Als Störsignale werden vorliegend alle Anteile eines empfangenen PLC-Signals angesehen, die von keinem ursprünglich gesendeten PLC-Signale herrühren und ebenso keine Signalanteile sind, die durch Rückwirkung einer Netzkomponente auf das Stromversorgungsnetzwerk entstanden sind. Daher kann der Frequenzbereich, in dem die Störsignale auftreten, bei der Bestimmung des Betriebszustands der Netzkomponente außen vor gelassen werden. Dadurch muss dieser Frequenzbereich nicht nach Rückwirkungen der Netzkomponente auf das Stromversorgungsnetzwerk durchsucht werden. Dies vereinfacht die Identifikation der Referenzcharakteristiken, da ein schmaleres Frequenzband zu durchsuchen ist.

In der Praxis sind viele Quellen derartiger Störsignale bekannt, so dass die Signale von derartigen bekannten Signalquellen als Störsignale angenommen werden können. Hierzu sei beispielsweise auf Funksignale, wie beispielsweise Kurzwellen-Radiosignale oder Amateurfunk-Signal, verwiesen. Die durch derartige Funksignale genutzten Frequenzen sind bekannt. Störsignale von bekannten Quellen können mit den zugehörigen Frequenzanteilen in einer Datenbank abgelegt und beim Extrahieren des Signalanteils verwendet werden.

Störsignale können in einer Phase der zeitweisen oder vollständigen Inaktivität des PLC-Systems identifiziert werden, beispielsweise in einer Sendepause aller PLC-Knoten oder vor Inbetriebnahme des PLC-Systems. In diesen Phasen der Inaktivität kann das PLC-System nach eingekoppelten Störsignalen suchen. Hat das PLC-System ein eingestreutes Störsignal zum ersten Mal identifiziert, kann dieses in einer Datenbank abgelegt werden. Ebenso können die bereits in der Datenbank abgelegten Störsignale zur Laufzeit des Verfahrens/Systems aktualisiert werden, wenn beispielsweise zuvor identifizierte Störsignale über längere Zeit nicht mehr identifiziert wurden. Die in der Datenbank abgelegten Störsignale können zur Identifizierung von in das PLC-Signal eingekoppelten Störsignalen genutzt werden.

In einem Ausführungsbeispiel kann der PLC-Knoten, der ein PLC-Signal auswertet, ein passiver PLC-Knoten sein, d.h. der PLC-Knoten ist nicht aktiv an dem Austausch der ausgewerteten PLC-Signale beteiligt. Dabei wertet der passive PLC-Knoten in eigenen Sendepausen nicht an ihn gerichtete PLC-Signale weiterer PLC-Knoten aus. Die weiteren PLC-Knoten tauschen untereinander Signale aus, ohne mit dem PLC-Knoten zu kommunizieren. Ein eintreffendes PLC-Signal wird von dem PLC-Knoten lediglich zum Bestimmen des Betriebszustands der Netzkomponente empfangen und ausgewertet. Da der PLC-Knoten nicht mit anderen PLC-Knoten kommuniziert, ist eine kommunikationsbedingte Auswertung nicht erforderlich.

In einem besonders bevorzugten Ausführungsbeispiel kann der PLC-Knoten, der ein PLC-Signal auswertet, ein aktiver PLC-Knoten sein, d.h. der PLC-Knoten tauscht mit einem oder mehreren weiteren PLC-Knoten PLC-Signale aus. Dabei ist das ausgewertete PLC-Signal ein an den auswertenden PLC-Knoten gerichtetes PLC-Signal eines der weiteren PLC-Knoten. Da der PLC-Knoten mit dem weiteren PLC-Knoten in kommunizierender Verbindung steht, ist eine kommunikationsbedingte Auswertung des PLC-Signals vorgesehen.

Im Falle eines aktiven PLC-Knoten wird zum Trennen eines empfangenen PLC-Signal und allen bei der Übertragung eingekoppelten Anteilen (Störsignale und Signalanteile aus Rückwirkungen) vorzugsweise ein Verfahren verwendet, wie es in der WO 2012/010163 A1 der Anmelderin offenbart ist und auf das hiermit ausdrücklich Bezug genommen wird. Das Verfahren dient vorwiegend dem Bewerten der Nutzbarkeit eines Subträgers eines Breitband PLC-Signals. Gleichzeitig erfolgt aber auch eine Trennung zwischen dem PLC-Signal und allen weiteren damit empfangenen Anteilen. Es wird zunächst ein auf einem Subträger empfangenes Signal mit der Inversen einer geschätzten Übertragungsfunktion des Übertragungskanals multipliziert, wodurch die Effekte des Übertragungskanals bei der Übertragung des PLC-Signals weitgehend beseitigt werden. Danach wird das derart gewonnene Signal dekodiert und einer Fehlererkennung und -korrektur unterzogen. Nach der Fehlerkorrektur wird das erkannte Symbol wieder in ein Sendesignal gewandelt und mit der geschätzten Übertragungsfunktion multipliziert. Dadurch entsteht ein fiktives Empfangssignal, das von allen Anteilen, die nicht von dem ursprünglich gesendeten PLC-Signal herrühren, bereinigt ist. Wenn dieses fiktive Empfangssignal von dem in dem Subträger tatsächlich empfangenen Signal abgezogen wird, entsteht ein Differenzsignal, das alle Störsignale und Signalanteile aus Rückwirkungen von Netzkomponenten enthält.

Wenn zum Extrahieren des Signalanteils, der durch Rückwirkung der Netzkomponente entstanden ist, ein Kanalmodell verwendet wird, kann das Kanalmodell zur Bestimmung der Beeinflussung des PLC-Signals durch den Übertragungskanal herangezogen werden. Jedes über das Stromversorgungsnetzwerk übertragene Signal (ob PLC-Signal, Störsignal oder Signalanteil aus Rückwirkungen) wird durch den Übertragungskanal beeinflusst. Auf der Übertragungsstrecke können beispielsweise Verzerrungen, Dämpfungen oder Echos auftreten. Unter Zuhilfenahme des Kanalmodells kann aus einem empfangenen Signal das gesendete Signal errechnet werden.

Der Übertragungskanal hängt von statischen Kanaleigenschaften ab. Die wichtigsten statischen Kanaleigenschaften sind bei einem PLC-System die physikalischen Eigenschaften der Übertragungsstrecke. Dies können beispielsweise die Kabellänge, der Kabeltyp, die Anzahl der Kabelabgänge, die Kabelmuffen und die Schaltzustände im Verteilnetz sein. Zum Erstellen des Kanalmodells können diese statischen Eigenschaften des Übertragungskanals verwendet werden. Ergänzend können Informationen bezüglich des zur Übertragung genutzten Frequenzbereichs einfließen. Beim Bestimmen des Kanalmodells unter Verwendung der physikalischen Eigenschaften der Übertragungsstrecke können Verkabelungspläne des Stromversorgungsnetzes oder eines Teilbereichs davon herangezogen werden.

Darüber hinaus können zum Erstellen des Kanalmodels die Ergebnisse einer Kanalvermessung mittels Pilot Tones ausgewertet werden. "Pilot Tones" werden bei Verbindungsaufbau zwischen zwei PLC-Komponenten ausgetauscht. Dadurch wird ermittelt, welche Teile des PLC-Spektrums für die Kommunikation in welcher Weise verwendet werden können und wie gut das Signal-zu-Rausch-Verhältnis (SNR) ist. Typische Ergebnisse dieser Kanalschätzung sind SNR-Werte, aus denen wiederum das verwendete Modulationsverfahren resultiert (beispielsweise BPSQ, QPSK, QAM, 256QAM, etc.). Des Weiteren werden die direkten Nachbarn und die Verbindung des PLC-Knotens zu diesen identifiziert. Gleichzeitig können durch Pilot Tones aber auch Rückschlüsse über Dämpfungen oder Echos gezogen werden, da ein PLC-Knoten, der Pilot Tones empfängt, die ursprüngliche Zusammensetzung des ausgesendeten Signals kennt und daher auf die Veränderung während der Übertragung schließe kann.

Zum Bestimmen der Referenzcharakteristiken können Rückwirkungen der Netzkomponente auf das Stromversorgungsnetzwerk herangezogen werden, beispielsweise leitungsgeführte Störspannungen. Die Referenzcharakteristiken können vom Hersteller der Netzkomponente bereitgestellt werden oder die Bestimmung der Referenzcharakteristiken kann als Teil des Abnahmeprotokolls eines Systems vorgesehen sein.

Zum Bilden der Referenzcharakteristik wird vorzugsweise eine Netzkomponente mit einem bekannten Betriebszustand an einer Netzspannung betrieben und die Rückwirkung aufgenommen. Hierzu kann beispielsweise ein Spektrumanalyser verwendet werden, das über eine Koppelschaltung und einen Spannungswandler mit der Netzspannung verbunden ist. Um eine maximale Kompatibilität mit der späteren Bestimmung des Betriebszustands zu erreichen, wird die Bestimmung der Rückwirkung einer Referenzkomponente vorzugsweise mit einem PLC-Knoten aufgenommen.

Zum Erzielen einer möglichst umfassenden Nutzbarkeit könnte die ermittelte Rückwirkung geeignet normiert werden, beispielweise auf eine Referenzspannung oder auf einen PLC-Knoten. Alternativ oder zusätzlich könnten Kennwerte extrahiert werden, die aus der ermittelten Rückwirkung gebildet werden. Für jede zu erkennende Netzkomponente wäre mindestens eine Referenzcharakteristik verfügbar. Dies kann beispielsweise ein besonders kritischer Fehlerzustand der Netzkomponente sein. Vorzugsweise ist für jede zu erkennende Netzkomponente und für jeden zu erkennenden Betriebszustand eine Referenzcharakteristik verfügbar.

Die Referenzcharakteristiken können in verschiedenen Betriebszuständen aufgenommen werden. Dabei kann mindestens einer der Betriebszustände ein Normalbetrieb sein, in dem die Netzkomponente fehlerfrei arbeitet. Es können auch mehrere Referenzcharakteristiken für den Normalbetrieb vorgesehen sein, da eine Netzkomponente mehrere fehlerfreie Betriebszustände aufweisen kann, beispielsweise unter verschiedenen Belastungen. Es wäre denkbar, dass nur eine Bestimmung von Normalzuständen vorgesehen ist. Aus der Kenntnis von in der Umgebung eines PLC-Knotens installierten Netzkomponenten, beispielsweise durch Vergleich einer Vielzahl von Messungen in zeitlichem Abstand zueinander, kann bei Fehlen einer Netzkomponente geschlossen werden, dass diese nicht mehr im Normalbetrieb arbeitet. Dies kann durch eine geplante Abschaltung der Netzkomponente oder durch einen Fehlerzustand hervorgerufen werden. Für die Planbarkeit einer Energieerzeugung haben beide Zuständen annähernd den gleichen Effekt, nämlich dass die betreffende Netzkomponente keine Energie in das Stromversorgungsnetzwerk einspeisen kann bzw. keine Energie verbraucht.

Vorzugsweise ist jedoch mindestens einer der Betriebszustände, die durch eine Referenzcharakteristik beschreibbar ist, ein Fehlerbetrieb. Im Fehlerbetrieb ist mindestens eine Funktion der Netzkomponente fehlerhaft. Regelmäßig können in einer Netzkomponente mehrere unterschiedliche Fehlerzustände auftreten. Jeder dieser Fehlerzustände kann prinzipiell durch eine entsprechende Referenzcharakteristik repräsentiert sein.

Für das Bestimmen eines Fehlerzustands können auch Signalanteile aus verschiedenen Phasen des Stromversorgungsnetzwerks miteinander korreliert werden. Dies setzt voraus, dass der PLC-Knoten an mehrere oder alle Phasen des Stromversorgungsnetzwerks angeschlossen ist und PLC-Signal aus den verbundenen Phasen empfangen und auswerten kann. Wenn beispielsweise ein Wechselrichter eine Gleichspannung eines Photovoltaik-Moduls in eine Wechselspannung wandelt, wird bei einem gebräuchlichen Drehstromnetze Energie symmetrisch auf allen drei Phasen eingespeist. Wenn jedoch beispielsweise in einem Zweig des Wechselrichters eine Komponente (z.B. ein Entstör-Kondensator oder eine Diode) gestört ist, entstehen Asymmetrien in der Einspeisung. Die Asymmetrien machen sich in einer charakteristischen Rückwirkung auf das Stromversorgungsnetzwerk bemerkbar. Durch Korrelieren von Werten aus mehreren Phasen kann diese Asymmetrie erkannt werden. Aus den Korrelationsergebnissen kann auf einen fehlerhaften Betrieb der Netzkomponente geschlossen werden.

Die Rückwirkungen der Netzkomponente können über eine vordefinierte Bandbreite hinweg erfasst werden. Dazu kann der PLC-Knoten lediglich PLC-Signale auswerten, die in der vordefinierten Bandbreite enthalten sind bzw. bestimmte Frequenzen aufweisen. Die Rückwirkungen der Netzkomponente können alternativ oder zusätzlich zu bestimmten Zeitpunkten innerhalb einer Periode der Netzspannung des Stromversorgungsnetzwerks erfasst werden. Dabei könnte das PLC-Signal nicht über die gesamte Zeit ausgewertet werden, sondern lediglich zu vordefinierten Zeitpunkten. Diese Zeitpunkte können in Abhängigkeit der Periode der Netzspannung festgelegt sein. Damit könnte eine hinreichend gute Bewertung erzielt werden und gleichzeitig der Aufwand der Bewertung minimiert werden.

Das Bestimmen von Betriebszuständen erfolgt vorzugsweise periodisch, wobei der Abstand der Auswertungen von der Wichtigkeit der gewonnenen Information abhängen kann. Bei Erzeugern, die eine vergleichsweise große Leistung auf Mittelspannungsebene in das Stromversorgungsnetzwerk einspeisen, ist ein Ausfall sicher kritischer als bei einer relativ kleinen Photovoltaik-Anlage mit lediglich wenigen kW maximaler Einspeiseleistung. Dies könnte sich in der Häufigkeit des Bestimmens des Betriebszustands wiederspiegeln. Während bei der großen Anlage beispielsweise alle 30 Minuten der Betriebszustand ermittelt wird, könnte bei der kleinen Anlage nur ein oder zwei Mal am Tag der Betriebszustand bestimmt werden. Alternativ könnte der Betriebszustand auch nach Bedarf erfolgen, wenn dies beispielsweise von einer Leitwarte aus angestoßen wird. Beide Ansätze können auch für verschiedene Anlagentypen kombiniert werden: Während eine Gruppen von Anlagen periodisch Informationen über den Betriebszustand generieren, kann eine andere Gruppe im Bedarfsfall abgefragt werden.

Da die PLC-Signale durch den im Stromversorgungsnetzwerk ausgeformten Übertragungskanal gedämpft werden, können die charakteristischen Rückwirkungen auf das Stromversorgungsnetzwerk nur in einem begrenzten Bereich des Stromversorgungsnetzwerks empfangen werden. Je nach Ausgestaltung der verwendeten Leitungen kann der Radius von wenigen Kilometern bis hin zu mehreren zehn Kilometern reichen. Durch die Verwendung von PLC-Knoten, die üblicherweise in relativ großer Dichte auf einem geografischen Gebiet verteilt sind, stellt dies kein Nachteil dar. Vielmehr kann dieser Effekt vorteilhafter Weise zur Lokalisierung von fehlerbehafteten Komponenten herangezogen werden. Die charakteristischen Rückwirkungen einer Netzkomponente breiten sich vom Ort der Netzkomponente in das Stromversorgungsnetzwerk aus. Durch die Dämpfung des Übertragungskanals werden die Signalanteile nach einer bestimmten Entfernung soweit gedämpft sein, dass sie nicht mehr durch einen PLC-Knoten detektierbar sind. Dadurch können nur bestimmte im Umkreis der Netzkomponente angeordnete PLC-Knoten die in das PLC-Signal eingekoppelten Signalanteile empfangen. Durch die Auswertung der Signalstärke und unter Nutzung des Standorts des/der PLC-Knoten kann der Ort der Netzkomponente im Stromversorgungsnetzwerk eingeschränkt werden.

Vorzugsweise umfasst das erfindungsgemäße System zum Bestimmen eines Betriebszustands von Netzkomponenten eine Vielzahl von PLC-Knoten, die über ein geografisches Gebiet verteilt sind. Jeder dieser PLC-Knoten überwacht dessen Umgebung und identifiziert vorzugsweise Netzkomponenten und deren Betriebszustände. Vorzugsweise werden die gewonnenen Informationen danach - eventuell in aggregierter Form - an einen Server gesendet, wobei der Einfachheit wegen PLC als Übertragungsmittel verwendet werden kann. An dem Server können die empfangenen Daten zusammen mit Informationen über den PLC-Knoten, der die Daten gewonnen hat, und gegebenenfalls einem Zeitstempel in einer zentralen Datenbank abgespeichert werden. Daraus können statistische Auswertungen über die Betriebszustände von einspeisenden Komponenten im Stromversorgungsnetzwerk gefahren werden. Allerdings können diese Informationen auch zur Einleitung von Gegenmaßnahmen, beispielsweise durch Information des Betreibers der Netzkomponente oder durch Beauftragung eines Wartungstechnikers, genutzt werden. Ergänzend oder alternativ können diese Informationen von einem Betreiber eines zentralen Kraftwerks genutzt werden, um zusammen mit dem Standardlastverlauf, den Wetterdaten und der Wettervorhersage die voraussichtlich bereitzustellende elektrische Energie zu schätzen.

In dem System kann das Mittel zum Bereitstellen von Referenzcharakteristiken durch eine Datenbank implementiert sein. Diese Datenbank kann auf dem zuvor erwähnten Server gespeichert sein. In der Datenbank können Charakteristiken von vorzugsweise aktiven Netzkomponenten, wie beispielsweise Wechselrichtern, abgelegt sein. Zur Reduzierung der notwendigen Übertragungskapazität könnte eine Kopie der Datenbank auf dem PLC-Knoten abgelegt sein und lediglich bei Zugriff auf eine Referenzcharakteristik ein Abgleich mit der zentralen Datenbank, beispielsweise durch Vergleich von Hash-Werten, erfolgen.

Es gibt nun verschiedene Möglichkeiten, die Lehre der vorliegenden Erfindung in vorteilhafter Weise auszugestalten und weiterzubilden. Dazu ist einerseits auf die dem Anspruch 1 bzw. 14 nachgeordneten Ansprüche und andererseits auf die nachfolgende Erläuterung eine bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt die einzige

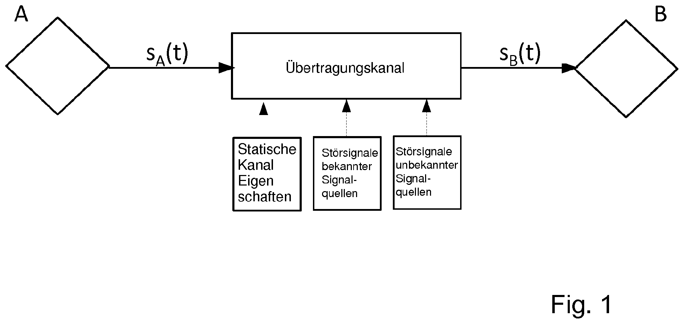

Fig 1. eine Übertragungsstrecke zwischen zwei PLC-Knoten.

In der einzigen Figur sind ein PLC-Knoten A und ein PLC-Knoten B gezeigt. Die PLC-Knoten A, B sind mit einem Stromversorgungsnetzwerk verbunden, auf dem ein Übertragungskanal ausgeformt ist. PLC-Knoten A sendet ein PLC-Signal s_{A}(t) über das Stromversorgungsnetzwerk an den PLC-Knoten B. Das PLC-Signal s_{A}(t) wird durch den Übertragungskanal und in den Übertragungskanal eingestreute Störsignale beeinflusst, so dass dieses als PLC-Signal s_{B}(t) vom PLC-Knoten B empfangen wird.

Der Übertragungskanal ist abhängig von statischen Eigenschaften. Die statischen Eigenschaften des Übertragungskanals stellen u.a. die physikalischen Parameter der Übertragungsstrecke im Stromversorgungsnetzwerk dar, über die das PLC-Signal s_{A}(t) von PLC-Knoten A zu PLC-Knoten B übermittelt wird. Dies können die Kabellänge, den Kabeltyp, die Anzahl der Kabelgänge, die Kabelmuffen und die Schaltzustände im Verteilnetz sein. Zudem können auf der Übertragungsstrecke bspw. Verzerrungen, Dämpfungen oder Echos auftreten.

Darüber hinaus werden auf der Übertragungsstrecke in das PLC-System Störsignale bekannter und unbekannter Signalquellen eingestreut. Die Störsignale bekannter Signalquellen strahlen meist Nutzsignale ab, die von den Signalquellen, jedoch nicht von dem PLC-System zur Kommunikation genutzt werden. Derartige Nutzsignale abstrahlende Signalquellen können Amateur-Funksender oder Kurzwellenrundfunk-Sender sein.

Die Störsignale unbekannter Signalquellen sind sämtliche Signale, die weder dem PLC-System noch den Störsignalen bekannter Signalquellen zugeordnet werden können. Auch die Störsignale unbekannter Signalquellen können in die Übertragungsstrecke einkoppeln und sich mit dem PLC-Signal überlagern. Die Störsignale unbekannter Signalquellen können über den Luftweg durch Funksender oder direkt in das Stromversorgungsnetzwerk durch Netzkomponenten eingebracht werden. Derartige unbekannte Signalquellen können u.a. Schaltnetzteile, Dimmer, Elektromotoren, Schalter, Leuchtstoffröhren oder Wechselrichter sein. Regelmäßig enthalten Störsignale unbekannter Signalquellen keine Nutzinformationen und werden von keinem System zur Kommunikation genutzt.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel der erfindungsgemäßen Verfahrens bzw. Systems lediglich zur Erörterung der beanspruchten Lehre dienen, diese jedoch nicht auf die Ausführungsbeispiele einschränken.

### Bezugszeichenliste

- A: PLC-Knoten
- B: PLC-Knoten
- s_{A}(t): Gesendetes PLC-Signal
- s_{B}(t): Empfangens PLC-Signal

## Patentansprüche

1. Verfahren zum Bestimmen eines Betriebszustands einer Netzkomponente in einem Stromversorgungsnetzwerk unter Verwendung eines Powerline Communication-Systems - PLC-System - mit einer Vielzahl von Powerline Communication-Knoten - PLC-Knoten (A, B) -, die über ein geographisches Gebiet verteilt sind, mit den Schritten:
Empfangen eines PLC-Signals (s_{B}(t)) durch einen Powerline Communication-Knoten - PLC-Knoten (A, B) - des PLC-Systems, wobei der PLC-Knoten (A, B) mit dem Stromversorgungsnetzwerk verbunden ist,
Extrahieren eines Signalanteils aus dem PLC-Signal (s_{B}(t)), der durch Rückwirkung der Netzkomponente auf das Stromversorgungsnetzwerk entstanden und in das PLC-Signal (s_{B}(t)) eingekoppelt ist,
Vergleichen des Signalanteils mit mindestens einer von mehreren Referenzcharakteristiken, wobei eine Referenzcharakteristik ein Verhalten der Netzkomponente bei bekanntem Betriebszustand beschreibt und wobei mindestens einer der Betriebszustände, die durch eine Referenzcharakteristik beschreibbar ist, ein Fehlerbetrieb ist,
Identifizieren einer Referenzcharakteristik, die dem extrahierten Signalanteil oder einer aus dem Signalteil gebildeten Charakteristik möglichst ähnlich ist, und
Bestimmen des Betriebszustands der Netzkomponente basierend auf der identifizierten Referenzcharakteristik.

2. Verfahren nach Anspruch 1, **dadurch gekennzeichnet, dass** das Extrahieren des Signalanteils aus dem PLC-Signal (s_{B}(t)) unter Verwendung von in das PLC-Signal (s_{B}(t)) eingekoppelten Störsignalen und/oder eines Kanalmodells durchgeführt wird, wobei das Kanalmodell ein Modell eines Übertragungskanals ist, über den das PLC-Signal (s_{B}(t)) übermittelt wird und der im Stromversorgungsnetzwerk ausgeformt ist, und
wobei als Störsignale Signale von bekannten Signalquellen angenommen werden, wobei die zu erwartenden Störsignale in einer Datenbank abgelegt sind.

3. Verfahren nach Anspruch 2, **dadurch gekennzeichnet, dass** die Störsignale in einer Phase der Inaktivität des PLC-Systems identifiziert und zur Laufzeit des Verfahrens aktualisiert werden.

4. Verfahren nach Anspruch 2 oder 3, **dadurch gekennzeichnet, dass** das PLC-Signal (s_{B}(t)) durch den PLC-Knoten (B) ausgewertet wird, wobei der PLC-Knoten (B) mit einem weiteren PLC-Knoten (A) PLC-Signale austauscht.

5. Verfahren nach einem der Ansprüche 2 bis 4, **dadurch gekennzeichnet, dass** das PLC-Signal (s_{B}(t)) durch den PLC-Knoten (B) ausgewertet wird, wobei der PLC-Knoten (B) eigene Sendepausen zur Aufzeichnung der Umgebung nutzt und wobei weitere PLC-Knoten untereinander PLC-Signale austauschen.

6. Verfahren nach einem der Ansprüche 2 bis 5, **dadurch gekennzeichnet, dass** das Kanalmodell zur Bestimmung der Beeinflussung des PLC-Signals (s_{B}(t)) durch den Übertragungskanal herangezogen wird.

7. Verfahren nach einem der Ansprüche 2 bis 6, **dadurch gekennzeichnet, dass** zum Erstellen des Kanalmodells statische Eigenschaften des Übertragungskanals, insbesondere die Kabellänge, der Kabeltyp, die Anzahl der Kabelgänge, die Kabelmuffen und die Schaltzustände im Verteilnetz, verwendet werden.

8. Verfahren nach einem der Ansprüche 2 bis 7, **dadurch gekennzeichnet, dass** zum Erstellen des Kanalmodels die Ergebnisse einer Kanalvermessung mittels Pilot Tones ausgewertet werden.

9. Verfahren nach einem der Ansprüche 1 bis 8, **dadurch gekennzeichnet, dass** zum Bestimmen der Referenzcharakteristiken Rückwirkungen der Netzkomponente auf das Stromversorgungsnetzwerk herangezogen werden.

10. Verfahren nach Anspruch 10, **dadurch gekennzeichnet, dass** die Referenzcharakteristiken mit einem PLC-Knoten aufgenommen oder auf einen PLC-Knoten normiert sind.

11. Verfahren nach Anspruch 9 oder 10, **dadurch gekennzeichnet, dass** Referenzcharakteristiken in verschiedenen Betriebszuständen aufgenommen werden, wobei mindestens einer der Betriebszustände ein Fehlerbetrieb ist, wobei die Netzkomponente im Fehlerbetrieb fehlerhaft arbeitet.

12. Verfahren nach Anspruch 11, **dadurch gekennzeichnet, dass** mindestens einer der Betriebszustände ein Normalbetrieb ist, wobei die Netzkomponente im Normalbetrieb fehlerfrei arbeitet.

13. Verfahren nach einem der Ansprüche 1 bis 12, **dadurch gekennzeichnet, dass** die Rückwirkungen der Netzkomponente über eine vordefinierte Bandbreite hinweg und/oder zu bestimmten Zeitpunkten innerhalb einer Periode der Netzspannung des Stromversorgungsnetzwerks erfasst werden.

14. System zum Bestimmen eines Betriebszustands einer Netzkomponente in einem Stromversorgungsnetzwerk unter Verwendung eines Powerline Communication-Systems - PLC-System - umfassend:
eine Vielzahl von PLC-Knoten (A, B), die über ein geographisches Gebiet verteilt und Bestandteil des PLC-Systems sind und die jeweils zum Empfangen eines PLC-Signals aus dem Stromversorgungsnetzwerk ausgebildet ist,
Mittel zum Extrahieren eines Signalanteils aus dem empfangenen PLC-Signal (s_{B}(t)), der durch Rückwirkung der Netzkomponente auf das Stromversorgungsnetzwerk entstanden und in das PLC-Signal (s_{B}(t)) eingekoppelt ist,
Mittel zum Bereitstellen von Referenzcharakteristiken, wobei eine Referenzcharakteristik ein Verhalten der Netzkomponente bei bekanntem Betriebszustand beschreibt,
Mittel zum Vergleichen des Signalanteils mit mindestens einer der Referenzcharakteristik,
Mittel zum Identifizieren einer Referenzcharakteristik, die dem extrahierten Signalanteil oder einer aus dem Signalteil gebildeten Charakteristik möglichst ähnlich ist, und
Mittel zum Bestimmen des Betriebszustands basierend auf der identifizierten Referenzcharakteristik, wobei mindestens einer der Betriebszustände, die durch eine Referenzcharakteristik beschreibbar ist, ein Fehlerbetrieb ist.

15. System nach Anspruch 14, **dadurch gekennzeichnet, dass** das Mittel zum Bereitstellen von Referenzcharakteristiken durch eine Datenbank implementiert ist, wobei in der Datenbank Referenzcharakteristiken aktiver Netzkomponenten abgelegt sind.

## Claims

1. Method for determining an operating state of a network component in a power supply network using a powerline communication system - PLC system - having a large number of powerline communication nodes - PLC nodes (A, B) - which are distributed over a geographical area, having the steps of:
receiving a PLC signal (s_{B}(t)) through a powerline communication node - PLC node (A, B) - of the PLC system,
wherein the PLC node (A, B) is connected to the power supply network,
extracting a signal portion from the PLC signal (s_{B}(t)) which has been produced by means of reaction of the network component on the power supply network and which is coupled into the PLC signal (s_{B}(t)),
comparing the signal portion with at least one of a plurality of reference characteristics, wherein a reference characteristic describes a behaviour of the network component during the known operating state and wherein at least one of the operating states which can be described by means of a reference characteristic is a fault mode,
identifying a reference characteristic which is as similar as possible to the extracted signal portion or a characteristic which is formed from the signal portion, and
determining the operating state of the network component based on the identified reference characteristic.

2. Method according to claim 1, **characterised in that** the extraction of the signal portion from the PLC signal (s_{B}(t)) is carried out using interference signals which are coupled into the PLC signal (s_{B}(t)) and/or a channel model, wherein the channel model is a model of a transmission channel via which the PLC signal (s_{B}(t)) is transmitted and which is formed in the flow supply network, and
wherein signals of known signal sources are accepted as interference signals, wherein the interference signals which are supposed to be anticipated are stored in a database.

3. Method according to claim 2, **characterised in that** the interference signals are identified in a phase of the inactivity of the PLC system and are updated at the running time of the method.

4. Method according to claim 2 or 3, **characterised in that** the PLC signal (s_{B}(t)) is evaluated by means of the PLC node (B), wherein the PLC node (B) exchanges PLC signals with another PLC node (A).

5. Method according to any one of claims 2 to 4, **characterised in that** the PLC signal (s_{B}(t)) is evaluated by the PLC node (B), wherein the PLC node (B) uses individual transmission pauses for recording the environment and wherein additional PLC nodes exchange PLC signals with each other.

6. Method according to any one of claims 2 to 5, **characterised in that** the channel model is used to determine the influencing of the PLC signal (s_{B}(t)) by the transmission channel.

7. Method according to any one of claims 2 to 6, **characterised in that**, in order to produce the channel model, static properties of the transmission channel, in particular the cable length, the cable type, the number of cable conduits, the cable sleeves and the switching states in the distribution network are used.

8. Method according to any one of claims 2 to 7, **characterised in that**, in order to produce the channel model, the results of a channel measurement are evaluated by means of pilot tones.

9. Method according to any one of claims 1 to 8, **characterised in that**, in order to determine the reference characteristics, reactions of the network component on the power supply network are used.

10. Method according to claim 10, **characterised in that** the reference characteristics are recorded with a PLC node or standardised on a PLC node.

11. Method according to claim 9 or 10, **characterised in that** reference characteristics are recorded in different operating states, wherein at least one of the operating states is a fault mode, wherein the network component operates incorrectly in the fault mode.

12. Method according to claim 11, **characterised in that** at least one of the operating states is normal operation, wherein the network component operates correctly in normal operation.

13. Method according to any one of claims 1 to 12, **characterised in that** the reactions of the network component are detected over a predefined band width and/or at specific times within a period of the network voltage of the power supply network.

14. System for determining an operating state of a network component in a power supply network using a powerline communication system - PLC system - comprising:
a large number of PLC nodes (A, B) which are distributed over a geographical area and which are a component of the PLC system and which are constructed in each case to receive a PLC signal from the power supply network,
means for extracting a signal portion from the received PLC signal (s_{B}(t)) which has been produced by means of reaction of the network component on the power supply network and which is coupled into the PLC signal (s_{B}(t)),
means for providing reference characteristics, wherein a reference characteristic describes a behaviour of the network component in a known operating state,
means for comparing the signal portion with at least one of the reference characteristics,
means for identifying a reference characteristic which is as similar as possible to the extracted signal portion or a characteristic which is formed from the signal portion, and means for determining the operating state based on the identified reference characteristic, wherein at least one of the operating states which can be described by means of a reference characteristic is a fault mode.

15. System according to claim 14, **characterised in that** the means for providing reference characteristics is implemented by means of a database, wherein reference characteristics of active network components are stored in the database.

## Revendications

1. Procédé de détermination de l'état de fonctionnement d'un composant de réseau dans un réseau d'alimentation électrique à l'aide d'un système de communication Powerline, système PLC, avec une pluralité de noeuds de communication Powerline, noeuds PLC (A, B), qui sont répartis sur une zone géographique, avec les étapes suivantes :
réception d'un signal PLC (s_{B}(t)) par un noeud de communication Powerline, noeuds PLC (A, B), du système PLC, le noeud PLC (A, B) étant relié avec le réseau d'alimentation électrique,
extraction d'une fraction du signal PLC (s_{B}(t)), qui provient de l'effet rétroactif du composant de réseau sur le réseau d'alimentation électrique et est introduit dans le signal PLC (s_{B}(t)),
comparaison de la fraction de signal avec au moins une parmi plusieurs caractéristiques de référence, une caractéristique de référence décrivant un comportement du composant de réseau lors d'un état de fonctionnement connu et au moins un des états de fonctionnement, qui peut être décrit par une caractéristique de référence, étant un mode d'erreur,
identification d'une caractéristique de référence qui est la plus similaire possible à la fraction de signal extraite ou à une caractéristique générée à partir du signal, et
détermination de l'état de fonctionnement du composant de réseau sur la base de la caractéristique de référence identifiée.

2. Procédé selon la revendication 1, **caractérisé en ce que** l'extraction de la fraction du signal PLC (s_{B}(t)) est effectuée à l'aide de signaux parasites introduits dans le signal PLC (s_{B}(t)) et/ou d'un modèle de canal, le modèle de canal étant un modèle de canal de transmission par l'intermédiaire duquel le signal PLC (s_{B}(t)) est transmis et qui est généré dans le réseau d'alimentation électrique, et
les signaux parasites utilisés sont des signaux de sources de signaux connues, les signaux parasites prévus étant enregistrés dans une base de données.

3. Procédé selon la revendication 2, **caractérisé en ce que** les signaux parasites sont identifiés dans une phase d'inactivité du système PLC et actualisés en fonction de la durée de fonctionnement du procédé.

4. Procédé selon la revendication 2 ou 3, **caractérisé en ce que** le signal PLC (s_{B}(t)) est analysé par le noeud PLC (B), le noeud PLC (B) échangeant des signaux PLC avec un autre noeud PLC (A).

5. Procédé selon l'une des revendications 2 à 4, **caractérisé en ce que** le signal PLC (s_{B}(t)) est analysé par le noeud PLC (B), le noeud PLC (B) utilisant ses propres pauses d'émission pour l'enregistrement de l'environnement et des noeuds PLC supplémentaires échangeant des signaux PLC entre eux.

6. Procédé selon l'une des revendications 2 à 5, **caractérisé en ce que** le modèle de canal est utilisé pour la détermination de l'influence du signal PLC (s_{B}(t)) par le canal de transmission.

7. Procédé selon l'une des revendications 2 à 6, **caractérisé en ce que**, pour la création du modèle de canal, les propriétés statiques du canal de transmission, plus particulièrement la longueur de câble, le type de câble, le nombre de conduits de câbles, les passe-câbles et les états de commutation dans le réseau de distribution, sont utilisées.

8. Procédé selon l'une des revendications 2 à 7, **caractérisé en ce que**, pour la création du modèle de canal, les résultats d'une mesure du canal à l'aide d'un Pilot Tones sont analysées.

9. Procédé selon l'une des revendications 1 à 8, **caractérisé en ce que**, pour la détermination des caractéristiques de référence, les effets rétroactifs du composant de réseau sur le réseau d'alimentation électrique sont utilisés.

10. Procédé selon la revendication 10, **caractérisé en ce que** les caractéristiques de référence sont enregistrées avec un noeud PLC ou sont normalisées sur un noeud PLC.

11. Procédé selon la revendication 9 ou 10, **caractérisé en ce que** les caractéristiques de référence sont enregistrées dans différents états de fonctionnement, au moins un des états de fonctionnement étant un mode d'erreur, le composant de réseau fonctionnant de manière erronée en mode d'erreur.

12. Procédé selon la revendication 11, **caractérisé en ce qu'**au moins un des états de fonctionnement est un mode normal, le composant de réseau fonctionnant sans erreur en mode normal.

13. Procédé selon l'une des revendications 1 à 12, **caractérisé en ce que** les effets rétroactifs du composant de réseau sont mesurés sur une bande passante prédéfinie et/ou à des instants déterminés au cours d'une période de la tension du réseau du réseau d'alimentation électrique.

14. Système de détermination d'un état de fonctionnement d'un composant de réseau dans un réseau d'alimentation électrique à l'aide d'un système de communication Powerline, système PLC, comprenant :
une pluralité de noeuds PLC (A, B), qui sont répartis sur une zone géographique et qui font partie du système PLC et qui sont conçus pour la réception d'un signal PLC à partir du réseau d'alimentation électrique,
des moyens permettant l'extraction d'une fraction de signal à partir du signal PLC (s_{B}(t)) reçu, qui provient de l'effet rétroactif du composant de réseau sur lé réseau d'alimentation électrique et est introduit dans le signal PLC (s_{B}(t)),
des moyens permettant la génération de caractéristiques de référence, une caractéristique de référence décrivant un comportement du composant de réseau dans le cas d'un état de fonctionnement connu,
des moyens permettant la comparaison de la fraction de signal avec au moins une des caractéristiques de référence,
des moyens permettant l'identification d'une caractéristique de référence, qui est la plus similaire possible à la fraction de signal extraite ou à une caractéristique générée à partir de la fraction de signal et
des moyens permettant la détermination de l'état de fonctionnement sur la base de la caractéristique de référence identifiée, au moins un des états de fonctionnement qui peut être décrit par une caractéristique de référence, est un mode d'erreur.

15. Système selon la revendication 14, **caractérisé en ce que** le moyen de génération de caractéristiques de référence est implémenté par une base de données, des caractéristiques de référence de composants de réseau actifs étant enregistrées dans la base de données.
